# EUROPÄISCHE PATENTSCHRIFT

(11) **EP 1 832 154 B1**
(45) Veröffentlichungstag und Bekanntmachung des Hinweises auf die Patenterteilung: **21.01.2009**
(21) Anmeldenummer: 07002581.2
(22) Anmeldetag: 07.02.2007
(51) Int. Cl.: A01D 34/33

(54) **Verbindungsanordnung zwischen einem Mähmesserantrieb und einem Mähmesser**
Connector assembly between a mower knife drive and a mower device
Dispositif de liaison entre un entraînement de lame de tondeuse et une lame de tondeuse

(30) Priorität: 07.03.2006 DE 102006010825
(43) Veröffentlichungstag der Anmeldung: 12.09.2007
(73) Patentinhaber: Schumacher, Günter, 57612 Eichelhardt (DE)
(72) Erfinder: Schumacher, Günter, 57612 Eichelhardt (DE); Schumacher, Heinrich-Günter, 57612 Eichelhardt (DE)
(74) Vertreter: Müller, Thomas Michael

(56) Entgegenhaltungen:
- WO-A-20/06013188
- CH-A- 159 879
- DE-A- 3 701 397
- DE-A1- 4 035 528
- GB-A- 420 795
- US-B- 6 876 111

## Beschreibung

Die Erfindung betrifft eine Verbindungsanordnung zwischen einem Mähmesserantrieb und einem Mähmesser.

Die DE 40 35 528 C2 beschreibt eine Verbindungsanordnung zwischen einem Mähmesserantrieb und einem linear hin- und hergehend bewegten Mähmesser bei Doppelmesserschneidwerken von Frontmähern.

Die Einleitung der Hubbewegung erfolgt über einen schwenkend bewegten Antriebshebel und einen daran angeschlossenen Mitnehmerzapfen, der ein Verbindungselement darstellt und ein eine Gelenklagerung umfassendes weiteres Verbindungselement, welches mit dem Mähmesser verbunden ist. Die Gelenkanordnung ist erforderlich, weil der Mitnehmerzapfen durch seine Anbindung an den Antriebshebel dessen Schwenkbewegung folgend auf einer Kreisbahn bewegt wird. Da das Mähmesser nur linear hin- und hergehend bewegbar geführt ist, muss die Anordnung im Betrieb ständig sowohl eine Schwenkbewegung des Mitnehmerzapfens zu dem mit dem Mähmesser verbundenen Verbindungselement als auch eine axiale Verstellung des Mitnehmerzapfens zulassen. Das zur Verbindung mit dem Mähmesser dienende erste Verbindungselement weist einen ringartig gestalteten Abschnitt und darin eine kreiszylindrische Bohrung auf. In dieser Bohrung ist ein in Umfangsrichtung geschlossener Zwischenring mit seiner an die Bohrung angepassten kreiszylindrischen Außenfläche aufgenommen und festgesetzt. Der Zwischenring besitzt eine hohlkugelige Innenfläche. An dieser hohlkugeligen Innenfläche ist ein in Umfangsrichtung geschlossener Lagerring mit einer kugeligen Außenfläche schwenkbeweglich aufgenommen. Der Lagerring weist eine kreiszylindrische Durchgangsbohrung auf. In dieser Durchgangsbohrung sitzt der Mitnehmerzapfen entlang der Achse der Durchgangsbohrung verschiebbar, um die aus der Bewegung des Mitnehmerzapfens mit dem Antriebshebel auf einer Kreisbahn resultierende Lageveränderung zur Verstellachse des Mähmessers ausgleichen zu können.

Es sind aber auch Mähmesserantriebe bekannt, bei denen in das mit dem Mähmesser verbundene Verbindungselement durch ein Getriebe, wie es beispielsweise in der DE 39 31 736 C2 beschrieben ist, unmittelbar eine der linearen hin- und hergehenden Bewegung des Mähmessers entsprechende Bewegung eingeleitet wird. Dabei sind in der Verbindungsanordnung zwischen einem als Antriebszapfen gestalteten Verbindungselement und einem mit dem Mähmesser verbundenen Verbindungselement keine ständigen Relativbewegungen auszugleichen. Es muss jedoch eine Einstellung möglich sein, die eine Anpassung der Relativstellung der Teile zueinander beim Einbau ermöglicht. Diese Einstellung muss sicher aufrechterhaltbar sein und ein leichtes Lösen für den Austausch, zum Beispiel des Mähmessers, ermöglichen.

Der Erfindung liegt die Aufgabe zugrunde, eine Verbindungsanordnung zwischen einem Mähmesserantrieb und einem Mähmesser zu schaffen, welche eine sichere Aufrechterhaltung der Einbaustellung erlaubt und für den Ausbau und den erneuten Einbau ein leichtes Lösen und Anpassen an die gegebenenfalls geänderten Einbauverhältnisse erlaubt, und darüber hinaus eine lange Lebensdauer ermöglicht.

Gelöst wird diese Aufgabe erfindungsgemäß durch eine Verbindungsanordnung zwischen einem Mähmesserantrieb und einem linear hin- und hergehend bewegten Mähmesser umfassend
- ein erstes metallisches Verbindungselement, das
   - entweder mit dem Mähmesser ein Bauteil bildet oder zur Verbindung mit demselben dient,
   - zumindest teilweise ringartig gestaltet und mit einer kreiszylindrischen Durchgangsbohrung ausgebildet ist, welche eine Längsachse bildet,
   - geschlitzt und mit Spannmitteln zur Veränderung des Querschnitts der Durchgangsbohrung versehen ist,
- einen metallischen Zwischenring, der
   - eine der Durchgangsbohrung angepasste kreiszylindrische Außenfläche aufweist,
   - eine hohlkugelige Innenfläche aufweist,
   - mit seiner Außenfläche in der Durchgangsbohrung aufgenommen ist,
   - auf seinem Umfang mindestens einen Schlitz aufweist,
- ein Rotationswälzlager, das
   - einen in Umfangsrichtung geschlossenen metallischen Lageraußenring mit einer kugeligen Lageraußenfläche aufweist, die zur Innenfläche des Zwischenringes passend ausgebildet ist und vom Zwischenring umschlossen ist sowie mindestens eine Außenlaufbahn bildet,
   - mindestens einen in Umfangsrichtung geschlossenen metallischen Lagerinnenring aufweist, welcher mindestens eine Innenlaufbahn bildet und welcher eine durchgehende Aufnahmebohrung aufweist,
   - Wälzkörper aufweist, die zwischen der Außenlaufbahn und der Innenlaufbahn angeordnet sind,
- ein zweites Verbindungselement, das
   - einen Mitnehmerzapfen umfasst, der in der Aufnahmebohrung sitzt.

Von Vorteil bei dieser Ausbildung ist, dass durch den ebenfalls wie die anderen Bauteile aus Metall hergestellten Zwischenring auch bei starker Vorspannung durch die Spannmittel keine Formänderung eintritt, die das Lösen der Verbindung erschwert. Nach dem Lösen der Spannmittel können leichtgängig Schwenkbewegungen des Rotationswälzlagers zum Zwischenring und Verstellungen des Zwischenringes entlang der Längsachse im ersten Verbindungselement ausgeführt werden. Dies ist besonders günstig, wenn der Zwischenring aus Stahl hergestellt ist. Auch alle anderen Bauteile der Verbindungsanordnung können günstig aus Stahl hergestellt sein. Die Verbindungsanordnung ist auch kompakt, weil der Lageraußenring gleichzeitig das Element darstellt, das im Zwischenring schwenkbar gehalten ist. Günstig ist auch, dass aufgrund der vorbeschriebenen Schachtelung Kräfte, die auf die Verbindungsanordnung ausgeübt werden, immer mittig auf den Lagerring einwirken. Durch die Herstellung des Zwischenrings aus Metall wird eine günstige Wärmeleitung vom Rotationswälzlager weg nach außen erzielt. Dies wird durch den unmittelbaren Kontakt der metallischen Bauteile noch gefördert.

Eine günstige Kraftaufnahme ergibt sich, wenn das Rotationswälzlager als Doppelkegelrollenlager gestaltet ist.

Die geschlitzte Ausbildung des ersten Verbindungselementes wird vorzugsweise dadurch erreicht, dass das erste Verbindungselement entlang der Längsachse eine erste Stirnfläche und eine zweite Stirnfläche aufweist und durch einen ersten Schlitz unterbrochen ist, der zwischen der ersten Stirnfläche und der zweiten Stirnfläche verläuft. Dabei läuft dieser erste Schlitz zweckmäßigerweise parallel zur Längsachse.

Um eine Verspannung zu erzielen, durch die der Querschnitt der Durchgangsbohrung verringert wird, ist vorgesehen, dass beidseitig des ersten Schlitzes vorstehend Ansätze dem ersten Verbindungselement angeformt sind, die durchbohrt sind und denen mindestens eine Spannschraube zugeordnet ist.

Der Zwischenring weist entlang der Längsachse eine erste Endfläche und eine zweite Endfläche auf. Eine günstige Gestaltung des Zwischenringes wird dadurch erreicht, dass dieser auf seinem Umfang durch einen sich zwischen der ersten Endfläche und der zweiten Endfläche erstreckenden zweiten Schlitz unterbrochen ist. Dabei kann dieser zweite Schlitz, projiziert auf die Längsachse, parallel zu dieser oder die Längsachse kreuzend verlaufen. Alternativ ist es möglich, dass der Zwischenring entlang der Längsachse eine erste Endfläche und eine zweite Endfläche aufweist und auf seinem Umfang mit von einer oder beiden Endflächen ausgehenden zweiten Schlitzen versehen ist, die jeweils vor der anderen Endfläche enden. Vorzugsweise ist dabei vorgesehen, dass die von unterschiedlichen Endflächen ausgehenden zweiten Schlitze über den Umfang des Zwischenrings abwechselnd angeordnet sind und vorzugsweise parallel zur Längsachse verlaufen.

Ein bevorzugtes Ausführungsbeispiel der Erfindung ist in der Zeichnung schematisch dargestellt.

Es zeigt
- Figur 1: eine Draufsicht auf eine Verbindungsanordnung gemäß der Erfindung mit der Anbindung zu dem Mähmesser,
- Figur 2: eine Ansicht in Pfeilrichtung X von Figur 1,
- Figur 3: einen Schnitt entlang einer Längsachse durch die Verbindungsanordnung,
- Figur 4: eine Ansicht vergleichbar zu Figur 2, wobei jedoch das erste Verbindungselement entfernt ist, und
- Figur 5: eine alternative Gestaltung eines Zwischenrings.

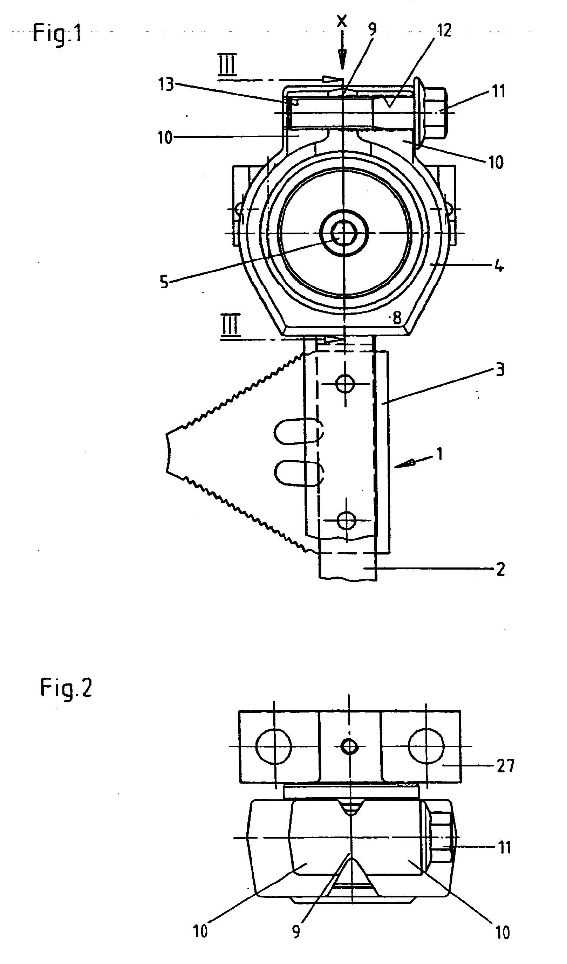

Aus der Ansicht gemäß Figur 1 ist ein Abschnitt eines Mähmessers 1 mit dem Messerrücken 2 und einer daran angebrachten Messerklinge 3 ersichtlich, wobei in der Blattebene in Verlängerung des Messerrückens 2 eine Vielzahl von solchen Messerklingen 3 an dem Messerrücken 2 angebracht ist. Am Ende des Messerrückens 2 ist ein metallisches erstes Verbindungselement 4 in Form eines Messerkopfauges angebracht, das eine erste Stirnfläche 7 und eine zweite Stirnfläche 8 und eine durch dasselbe hindurch verlaufende und sich zwischen den beiden Stirnflächen 7, 8 erstreckende Durchgangsbohrung 6 aufweist, die auf einer Längsachse 5 zentriert ist.

Wie insbesondere aus Figur 2 erkenntlich ist, ist das erste Verbindungselement 4, welches ringartig gestaltet ist, geschlitzt. Es verläuft ein erster Schlitz 9 zwischen den beiden Stirnflächen 7, 8. Der erste Schlitz 9 verläuft parallel zur Längsachse 5. Er könnte auch unter einem Winkel zu derselben angeordnet sein.

Beidseitig des ersten Schlitzes 9 befinden sich zwei von der Längsachse 5 weg vorstehende Ansätze 10. Einer dieser beiden Ansätze 10 ist mit einer durchgehenden Bohrung 12 versehen, die auf einer Achse angeordnet ist, welche die Längsachse 5 mit Abstand kreuzt. Auf der Achse dieser Bohrung 12 ist in dem zweiten Ansatz 10 eine Gewindebohrung 13 angeordnet. Eine Spannschraube 11, insbesondere Kopfschraube, tritt durch die Bohrung 12 hindurch und wird in die Gewindebohrung 13 eingeschraubt, so dass sie eine Verringerung des Querschnittes der Durchgangsbohrung 6 bewirkt, je nachdem, wie stark sie angezogen wird.

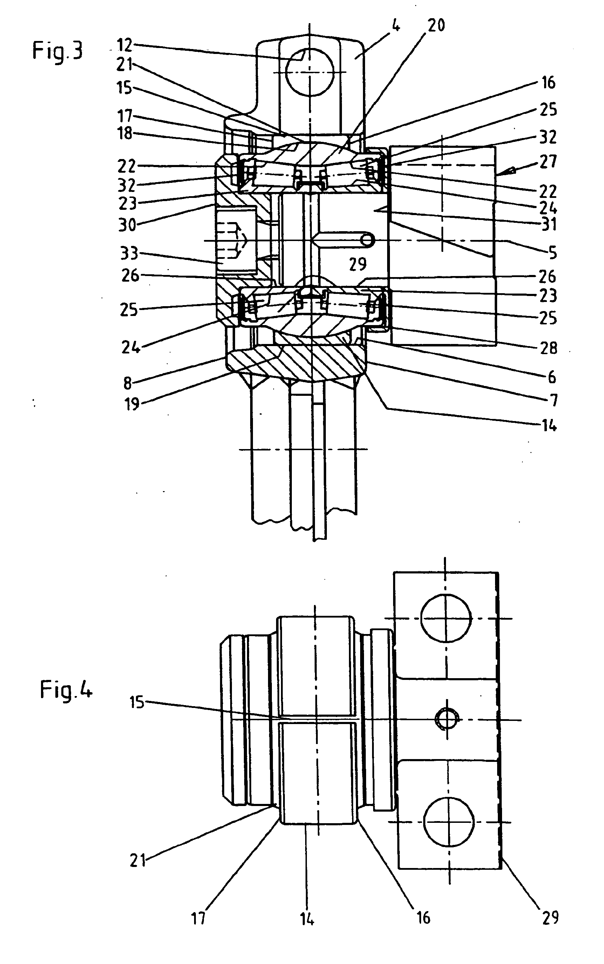

In der kreiszylindrischen Durchgangsbohrung 6 sitzt ein metallischer Zwischenring 14, wie insbesondere aus Figur 3 ersichtlich. Dieser Zwischenring 14 weist eine erste Endfläche 16 und eine zweite Endfläche 17 entlang der Längsachse 5 auf und ist auf seinem Umfang durch einen zweiten Schlitz 15 unterbrochen, der sich zwischen der ersten Endfläche 16 und der zweiten Endfläche 17 erstreckt. Dieser Schlitz ist, wie aus Figur 4 ersichtlich, parallel zur Längsachse 5 ausgerichtet, kann aber auch unter einem Winkel zu derselben verlaufen, so dass er diese kreuzt.

Der Zwischenring 14 ist vorzugsweise aus einem Stahl hergestellt, so dass, wenn kein Druck auf ihn quer zur Längsachse 5 ausgeübt wird, er elastisch den zweiten Schlitz 15 offen hält. Der Zwischenring weist eine hohlkugelige Innenfläche 18 und eine kreiszylindrische Außenfläche 19 auf. Er ist mit der kreiszylindrischen Außenfläche 19 in der kreiszylindrischen Durchgangsbohrung 6 des ersten Verbindungselementes 4 aufgenommen und darin entlang der Längsachse 5 verstellbar. Dies bedeutet, dass der Abstand zwischen der ersten Stirnfläche 7 und der zweiten Stirnfläche 8 des ersten Verbindungselementes 4 größer ist als der Abstand zwischen der ersten Endfläche 16 und der zweiten Endfläche 17 des Zwischenringes 14.

Das Rotationswälzlager umfasst einen Lageraußenring 20, der in Umfangsrichtung geschlossen ist und eine kugelige Lageraußenfläche 21 aufweist. Die kugelige Lageraußenfläche 21 ist an die hohlkugelige Innenfläche 18 des Zwischenringes 14 angepasst. Die Montage des Zwischenringes 14 auf dem Lageraußenring 20 kann durch elastisches Aufweiten des Zwischenringes infolge des zweiten Schlitzes 15 und der hohlkugeligen Innenfläche 18 auf der kugeligen Lageraußenfläche 21 des Lageraußenringes 20 erfolgen.

Der Lageraußenring 20 ist durch diese Anordnung schwenkbar in dem Zwischenring 14 gehalten.

Der Lageraußenring 20 weist zwei kegelige Außenlaufbahnen 22 auf, deren Durchmesser aufeinander zu abnimmt. Es sind ferner zwei Lagerinnenringe 23 vorgesehen, so wie sie bei Kegelrollenlagern üblich sind. Diese beiden Lagerinnenringe 23 weisen jeweils eine Innenlaufbahn 24 auf. Zwischen der Außenlaufbahn 22 des Lageraußenringes 20 und der Innenlaufbahn 24 eines jeden Lagerinnenringes 23 sind in Umfangsrichtung insgesamt zwei Reihen von Wälzkörpern in Form von Kegelrollen angeordnet. Anstelle einer Ausbildung als Kegelrollenlager ist auch eine Ausbildung beispielsweise als zweireihiges Schrägschulterkugellager möglich. Die beiden Lagerinnenringe 24 bilden zusammen eine Aufnahmebohrung 26, die kreiszylindrisch gestaltet ist und in der ein zum zweiten Verbindungselement in Form eines Anschlussblockes gehörender Mitnehmerzapfen 29 fest aufgenommen ist. Der Mitnehmerzapfen 29 endet in einer Schulter 31. An diese Schulter 31 legt sich einer der Lagerinnenringe 23 an. Die beiden Lagerinnenringe 23 werden gegen diese Schulter 31 durch einen Befestigungsring 30 gepresst, der durch eine Schraube 33, die entlang der Längsachse in den Mitnehmerzapfen 29 eingeschraubt ist, festgesetzt ist. Hierdurch werden auch die beiden Lagerreihen des als Kegelrollenlager gestalteten Rotationswälzlagers vorgespannt. Das Rotationswälzlager kann aus metallischen Werkstoffen hergestellt sein, die für solche Lager und Belastungen, wie sie bei Mähmesserantrieben üblich sind, angemessen sind.

Die Abdichtung erfolgt einerseits durch die Ausbildung des Befestigungsringes 30 in Verbindung mit einer Dichtung 32 und darüber hinaus in Richtung zur Schulter 31 ebenfalls durch eine Dichtung 32 und einen Schutzring 28.

Die richtige Position des zweiten Verbindungselementes 27 und insbesondere des Mitnehmerzapfens 29 in Schwenkrichtung um den durch die hohlkugelige Innenfläche 28 und die kugelige Lageraußenfläche 20 gebildeten Schwenkmittelpunkt, der auf der Längsachse 5 liegt, entsprechend den Einbauverhältnissen, d.h. auch in einer Neigungsposition und einer entlang der Achse der Durchgangsbohrung 6 eingestellte Position des Zwischenringes 14 kann dadurch fixiert werden, dass die Spannmittel in Form der Spannschraube 11 festgezogen werden. Dadurch verringert sich der Querschnitt der Durchgangsbohrung 6 so, dass eine radiale Kraft auf den Zwischenring 14 ausgeübt wird. Da der Zwischenring 14 selbst wieder geschlitzt ist, d.h. den zweiten Schlitz 15 zwischen seinen Endflächen 16, 17 aufweist, kann ebenfalls der Durchmesser dieses Zwischenringes 14 verringert werden und dieser presst sich mit seiner hohlkugeligen Innenfläche 18 gegen die kugelige Lageraußenfläche 21 des Lageraußenringes 20 an. Damit wird dieser festgesetzt. Der Lageraußenring 20 ist von seinen Abmessungen her so gewählt, dass er selbst keiner Verformung unterliegt und damit auch durch das Anpressen kein Einfluss auf das Lagerspiel und die Laufverhältnisse des Rotationswälzlagers ausgeübt werden.

Durch die Ausbildung des Zwischenringes aus einem Metall und insbesondere aus einem Stahl, der so federt, dass er seine ursprüngliche Form wieder einnimmt, in der der Schlitz im entspannten Zustand seine größte Weite aufweist, wird die Klemmwirkung nach dem Lösen der Spannschraube wirksam aufgehoben und es ist eine erneute leichtgängige Einstellung möglich.

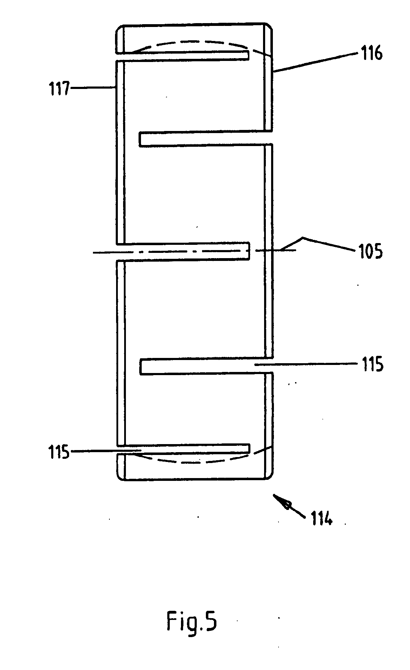

Figur 5 zeigt einen im Verhältnis zu den anderen Zeichnungsfiguren im vergrößerten Maßstab als Einzelteil in Seitenansicht dargestellten Zwischenring 114 in einer zu den übrigen Figuren abgewandelten Ausführungsform. Die Innenfläche ist ebenfalls als (nicht sichtbare) Hohlkugelfläche gestaltet. Der Zwischenring 114 ist auf seinem Umfang um die Längsachse 105 mit zweiten Schlitzen 115 versehen. Eine Teilanzahl der zweiten Schlitze 115 geht von der Endfläche 116 aus und endet vor der Endfläche 117. Die restliche Anzahl der zweiten Schlitze 115 geht von der Endfläche 117 aus und endet vor der Endfläche 116. Die zweiten Schlitze 115 sind abwechselnd von der einen Endfläche 116 und der anderen Endfläche 117 ausgehend auf dem Umfang des Zwischenrings 115 verteilt angeordnet. Durch diese Ausbildung ist der Zwischenring 114 radial elastisch verformbar und hält den Lageraußenring des Rotationswälzlagers im verspannten Zustand fest. Der Zwischenring 114 ist ebenfalls aus Metall, insbesondere Stahl hergestellt. Neben Stahl kommen auch andere Metalle in Frage. Die zweiten Schlitze 115 verlaufen parallel zur Längsachse 105.

### Bezugszeichenliste

- 1: Mähmesser
- 2: Messerrücken
- 3: Messerklinge
- 4: erstes Verbindungselement / Messerkopfauge
- 5, 105: Längsachse
- 6: Durchgangsbohrung
- 7: erste Stirnfläche
- 8: zweite Stirnfläche
- 9: erster Schlitz
- 10: Ansatz
- 11: Spannschraube
- 12: Bohrung
- 13: Gewindebohrung
- 14, 114: Zwischenring
- 15, 115: zweiter Schlitz
- 16, 116: erste Endfläche
- 17, 117: zweite Endfläche
- 18: hohlkugelige Innenfläche
- 19: kreiszylindrische Außenfläche
- 20: Lageraußenring
- 21: kugelige Lageraußenfläche
- 22: Außenlaufbahn
- 23: Lagerinnenring
- 24: Innenlaufbahn
- 25: Wälzkörper
- 26: Aufnahmebohrung
- 27: zweites Verbindungselement / Anschlussblock
- 28: Schutzring
- 29: Mitnehmerzapfen
- 30: Befestigungsring
- 31: Schulter
- 32: Dichtung
- 33: Schraube

## Patentansprüche

1. Verbindungsanordnung zwischen einem Mähmesserantrieb und einem linear hin- und hergehend bewegten Mähmesser (1) umfassend
- ein erstes metallisches Verbindungselement (4), das
- entweder mit dem Mähmesser (1) ein Bauteil bildet oder zur Verbindung mit demselben dient,
- zumindest teilweise ringartig gestaltet und mit einer kreiszylindrischen Durchgangsbohrung (6) ausgebildet ist, welche eine Längsachse (5) bildet,
- geschlitzt und mit Spannmitteln (11) zur Veränderung des Querschnitts der Durchgangsbohrung (6) versehen ist,
- einen metallischen Zwischenring (14, 114), der
- eine der Durchgangsbohrung (6) angepasste kreiszylindrische Außenfläche (19) aufweist,
- eine hohlkugelige Innenfläche (18) aufweist,
- mit seiner Außenfläche (19) in der Durchgangsbohrung (6) aufgenommen ist,
- auf seinem Umfang mindestens einen Schlitz (15, 115) aufweist, ,
- ein Rotationswälzlager, das
- einen in Umfangsrichtung geschlossenen metallischen Lageraußenring (20) mit einer kugeligen Lageraußenfläche (21) aufweist, die zur Innenfläche (18) des Zwischenringes (14) passend ausgebildet ist und vom Zwischenring (14) umschlossen ist sowie mindestens eine Außenlaufbahn (22) bildet,
- mindestens einen in Umfangsrichtung geschlossenen metallischen Lagerinnenring (23) aufweist, welcher mindestens eine Innenlaufbahn (24) bildet und welcher eine durchgehende Aufnahmebohrung (26) aufweist,
- Wälzkörper (25) aufweist, die zwischen der Außenlaufbahn (22) und der Innenlaufbahn (24) angeordnet sind,
- ein zweites Verbindungselement (27), das
- einen Mitnehmerzapfen (29) umfasst, der in der Aufnahmebohrung (26) sitzt.

2. Verbindungsanordnung nach Anspruch 1,
**dadurch gekennzeichnet,**
**dass** das Rotationswälzlager als Doppelkegelrollenlager gestaltet ist.

3. Verbindungsanordnung nach Anspruch 1,
**dadurch gekennzeichnet,**
**dass** das erste Verbindungselement (4) entlang der Längsachse (5) eine erste Stirnfläche (7) und eine zweite Stirnfläche (8) aufweist und dass das erste Verbindungselement (4) durch einen ersten Schlitz (9) unterbrochen ist, der zwischen der ersten Stirnfläche (7) und der zweiten Stirnfläche (8) verläuft.

4. Verbindungsanordnung nach Anspruch 3,
**dadurch gekennzeichnet,**
**dass** beidseitig des ersten Schlitzes (9) vorstehend Ansätze (10) dem ersten Verbindungselement (4) angeformt sind, die durchbohrt sind und denen mindestens eine Spannschraube (11) zugeordnet ist.

5. Verbindungsanordnung nach Anspruch 1,
**dadurch gekennzeichnet,**
**dass** der Zwischenring (14) entlang der Längsachse (5) eine erste Endfläche (16) und eine zweite Endfläche (17) aufweist und
**dass** der Zwischenring (14) auf seinem Umfang durch einen sich zwischen der ersten Endfläche (16) und der zweiten Endfläche (17) erstreckenden zweiten Schlitz (15) unterbrochen ist.

6. Verbindungsanordnung nach Anspruch 1,
**dadurch gekennzeichnet,**
**dass** der Zwischenring (114) entlang der Längsachse (115) eine erste Endfläche (116) und eine zweite Endfläche (117) aufweist und auf seinem Umfang mit von einer oder beiden Endflächen (116, 117) ausgehenden zweiten Schlitzen (115) versehen ist, die jeweils vor der anderen Endfläche (116, 117) enden.

7. Verbindungsanordnung nach Anspruch 6,
**dadurch gekennzeichnet,**
**dass** die von unterschiedlichen Endflächen (116, 117) ausgehenden zweiten Schlitze (115) über den Umfang des Zwischenrings (114) abwechselnd angeordnet sind.

8. Verbindungsanordnung nach Anspruch 5,
**dadurch gekennzeichnet,**
**dass** der zweite Schlitz (15), projiziert auf die Längsachse (5), parallel zu dieser
oder die Längsachse (5) kreuzend verläuft.

9. Verbindungsanordnung nach Anspruch 6,
**dadurch gekennzeichnet,**
**dass** die zweiten Schlitze (115) parallel zur Längsachse (105) verlaufen.

## Claims

1. Connection arrangement between a mowing sickle drive and a linearly moved reciprocating mowing sickle (1) comprising
- a first metal connection element (4), which
- either forms with the mowing sickle (1) one component or serves for connecting to the same,
- is formed at least partially annularly and is formed with a circular cylindrical through bore (6), which forms a longitudinal axis (5),
- is slotted and is provided with clamping means (11) for changing the cross-section of the through bore (6),
- a metal intermediate ring (14, 114), which
- has a circular cylindrical outer face (19) adapted to the through bore (6),
- has a hollow spherical inner face (18),
- is accommodated with its outer face (19) in the through bore (6),
- has on its outer circumferential face at least one slot (15, 115),
- a rotational rolling member bearing, which
- has a metal outer bearing ring, closed in circumferential direction, with a spherical outer bearing face (21), which is formed fittingly to the inner face (18) of the intermediate ring (14) and is enclosed by the intermediate ring (14) and forms as well at least one outer race (22),
- has at least one metal inner bearing ring (23) closed in circumferential direction and which forms at least one inner race (24) and which has a through extending accommodation bore (26),
- has rolling member bodies (25), which are arranged between the outer race (22) and the inner race (24),
- a second connection element (27), which
- comprises a driving trunnion (29), which rests in the accommodation bore (26).

2. Connection arrangement according to claim 1,
**characterised in**
**that** the rotational rolling member bearing is formed as a double taper roller bearing.

3. Connection arrangement according to claim 1,
**characterised in**
**that** the first connection element (4) has along the longitudinal axis (5) a first front face (7) and a second front face (8), and in that the first connection element (4) is interrupted by a first slot (9), which extends between the first front face (7) and the second front face (8).

4. Connection arrangement according to claim 3,
**characterised in**
**that** projecting lugs (10) are formed at both sides of the first slot (9) on the first connection element (4), which are bored through and to which at least one clamping screw (11) is arranged.

5. Connection arrangement according to claim 1,
**characterised in**
**that** the intermediate ring (15) has along the longitudinal axis (5) a first end face (16) and a second end face (17) and
**that** the intermediate ring (14) is interrupted on its circumference by a second slot (15) extending between the first end face (16) and the second end face (17).

6. Connection arrangement according to claim 1,
**characterised in**
**that** the intermediate ring (114) has along the longitudinal axis (115) a first end face (116) and a second end face (117) and is provided on its circumference with second slots (115) starting from one or both end faces (116, 117) and which respectively end in front of the other end face (116, 117).

7. Connection arrangement according to claim 6,
**characterised in**
**that** the second slots (115), starting from different end faces (116, 117), are arranged alternately over the circumference of the intermediate ring (114).

8. Connection arrangement according to claim 5,
**characterised in**
**that** the second slot (15), projected onto the longitudinal axis (5), extends parallel to or intersects the longitudinal axis (5).

9. Connection arrangement according to claim 6,
**characterised in**
**that** the second slots (115) extend parallel to the longitudinal axis (105).

## Revendications

1. Dispositif de liaison entre un entraînement de lame de tondeuse et une lame de tondeuse (1) en mouvement linéaire de part et d'autre, comprenant
- un premier élément de liaison mécanique (4), qui
- soit forme un élément constitutif avec la lame de tondeuse (1) ou sert pour la liaison avec cette dernière,
- est conformé au moins en partie sous forme annulaire et est réalisé avec un trou de passage (6) cylindrique circulaire, lequel forme un axe longitudinal (5),
- est fendu et muni de moyens de serrage (11) pour modifier la section transversale du trou de passage (6),
- une bague intermédiaire métallique (14, 114), qui
- comporte une surface extérieure (19) cylindrique circulaire adaptée au trou de passage (6),
- comporte une surface intérieure (18) sphérique creuse,
- est logée par sa surface extérieure (19) dans le trou de passage (6),
- comporte sur sa périphérie au moins une encoche (15, 115),
- un roulement rotatif, qui
- comporte une bague extérieure de roulement métallique (20) fermée en direction périphérique, avec une surface extérieure de roulement sphérique (21) qui est conçue pour s'adapter à la surface intérieure (18) de la bague intermédiaire (14) est qui est entourée par la bague intermédiaire (14) et forme au moins un chemin de roulement extérieur (22),
- au moins une bague intérieure de roulement métallique (23) fermée en direction périphérique, qui comporte au moins un chemin de roulement intérieur 24) et qui comporte un perçage de logement traversant (26),
- comporte des corps de roulement (25) qui sont disposés entre le chemin de roulement extérieur (22) et le chemin de roulement intérieur (24),
- un deuxième élément de liaison mécanique (27), qui
- comprend un tenon d'entraînement (29) qui est logé dans le perçage de logement (26).

2. Dispositif de liaison selon la revendication 1,
**caractérisé en ce que**,
le roulement rotatif est conformé comme un palier à double roulement conique.

3. Dispositif de liaison selon la revendication 1,
**caractérisé en ce que**,
le premier élément de liaison (4) comporte le long de l'axe longitudinal (5) une première face frontale (7) et une deuxième face frontale (8) et que le premier élément de liaison (4) est interrompu par une première encoche (9) qui s'étend entre la première face frontale (7) et la deuxième face frontale (8).

4. Dispositif de liaison selon la revendication 3,
**caractérisé en ce que**
de part et d'autre de la première encoche (9), des embouts saillants (10) qui sont percés de part en part et auxquels est associée au moins une vis de serrage (11) sont rapportés sur le premier élément de liaison (4).

5. Dispositif de liaison selon la revendication 1,
**caractérisé en ce que**
la bague intermédiaire (14) comporte le long de l'axe longitudinal (5) une première surface d'extrémité (16) et une deuxième surface d'extrémité (17) et
**en ce que** la bague intermédiaire (14) est interrompue sur sa périphérie par une deuxième encoche (15) qui s'étend entre la première surface d'extrémité (16) et la deuxième surface d'extrémité (17).

6. Dispositif de liaison selon la revendication 1,
**caractérisé en ce que**
la bague intermédiaire (114) comporte le long de l'axe longitudinal (115) une première surface d'extrémité (116) et une deuxième surface d'extrémité (117) et est munie sur sa périphérie de deuxièmes encoches (115) partant de l'une ou des deux surfaces d'extrémité (116, 117), qui se terminent chacune avant l'autre surface d'extrémité (116, 117).

7. Dispositif de liaison selon la revendication 6,
**caractérisé en ce que**
les deuxièmes encoches (115) partant de différentes surfaces d'extrémité (116, 117) sont disposées en alternance sur la périphérie de la bague intermédiaire (114).

8. Dispositif de liaison selon la revendication 5,
**caractérisé en ce que**,
projetée sur l'axe longitudinal (5), la deuxième encoche (15), s'étend à la parallèle de ce dernier ou en croisant l'axe longitudinal (5).

9. Dispositif de liaison selon la revendication 6,
**caractérisé en ce que**,
les deuxièmes encoches (115) s'étendent à la parallèle de l'axe longitudinal (105).
